Europäisches Patentamt

European Patent Office

Office européen des brevets

(19)

(11) Numéro de publication : **0 661 853 A1**

# (12) DEMANDE DE BREVET EUROPEEN

(21) Numéro de dépôt : **94403052.7**

(22) Date de dépôt : **28.12.94**

(51) Int. Cl.$^6$ : **H04L 27/22, G01S 13/76, G07B 15/00**

(30) Priorité : **30.12.93 FR 9315885**

(43) Date de publication de la demande :
**05.07.95 Bulletin 95/27**

(84) Etats contractants désignés :
**DE FR GB IT NL SE**

(71) Demandeur : **THOMSON-CSF**
**173, Boulevard Haussmann**
**F-75008 Paris (FR)**

(72) Inventeur : **Hethuin, Serge**
**THOMSON-CSF,**
**SCPI,**
**B.P. 329**
**F-92402 Courbevoie Cedex (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(54) **Procédé de démodulation de phase notamment pour péages automatiques.**

(57) L'invention concerne un système de communication hyperfréquence échangeant des informations, suivant un protocole déterminé, entre une balise fixe et au moins un badge détecté par la balise mettant en oeuvre un procédé et un dispositif de démodulation numérique à différentiation de phase consistant à démoduler un signal (E) ayant subi une modulation bi-phase différentielle type S encore appelée modulation FMO, et reçu par un récepteur homodyne (21 à 37) permettant la formation d'une première voie (I) et d'une deuxième voie (Q) portant respectivement un signal $(I_1)$ en phase et un signal $(Q_1)$ en quadrature de phase avec le signal d'entrée (E) du récepteur (21 à 37), et comportant, pour s'affranchir du besoin d'un convertisseur analogique-numérique à l'entrée de chaque voie (I et Q), des moyens (47 et 49 à 52) pour comparer les valeurs absolues des amplitudes des deux signaux de sortie des voies (I et Q), le résultat de cette comparaison donnant des conditions déterminées $(C_{IQ}, C_1, C_2, C'_1 \text{ et } C'_2)$, et des moyens de calcul utilisant les résultats d'exploitation de ces conditions $(C_{IQ}, C_1, C_2, C'_1 \text{ et } C'_2)$ par une logique d'exploitation déterminée, pour calculer la différence d'état du signal de sortie pris entre l'instant d'échantillonnage courant (t) et l'instant d'échantillonnage précédent (t-T), l'intervalle de temps, séparant ces deux instants d'échantillonnage correspondant à un temps bit (T).
Application : Télépéages autoroutiers et autres.

FIG. 6

EP 0 661 853 A1

La présente invention concerne un procédé et un dispositif de démodulation à différentiation de phase, appelé également PSK abréviation anglo-saxonne pour "Phase-Shift Keying", et un système de communication hyperfréquence appliqué notamment au péage automatique sur voies de circulation payantes.

Certains systèmes transactionnels utilisés pour les péages autoroutiers sont déjà connus et comportent une balise au sol accolée à la guérite du caissier pour le péage manuel, et un badge vendu à chaque utilisateur du péage automatique. Pour payer, l'utilisateur doit quasiment s'arrêter pour présenter son badge à quelques dizaines de centimètres de la balise au sol et attendre le passage au vert du feu du péage et la levée de la barrière. Un tel système est dit de première génération à cause du quasi arrêt qu'il nécessite et fait généralement appel à des techniques magnétique, infra-rouge ou encore électromagnétique.

Des équipements dits de seconde génération, actuellement en cours d'installation, permettent de franchir le canal de péage à vitesse un peu plus importante de l'ordre de 40 à 60 kms/heure mais nécessite toujours le passage d'un feu au vert. Ils font partie de ce qui est appelé le "mode canalisé", expression signifiant que les voitures doivent passer dans un canal de péage et attendre un indicateur de péage, acquitté soit par un feu, soit par une barrière en raison de la législation du système de la preuve de non acquittement.

Des équipements de troisième génération, actuellement en cours de développement, correspondent à la possibilité de payer son droit de passage sans formalité particulière, sans canal d'accès, à vitesse nominale avec ou sans dépassement de la vitesse autorisée.

Un badge est disposé par exemple sur le pare-brise d'un véhicule à l'intérieur du véhicule et il est destiné à recevoir une carte à puce sur laquelle une somme d'argent est préprogrammée, comme les cartes de téléphone, ou le numéro de carte ou de compte bancaire du propriétaire de la carte. La balise est généralement installée en haut d'un portique du même type que ceux supportant les panneaux indicateurs de direction par exemple et son lobe d'antenne balaye la voie de circulation, ou canal, emprunté par les véhicules.

Une communication selon un protocole particulier s'engage alors entre la balise et le badge. La communication est orchestrée par la balise. Celle-ci émet des cycles continus d'ondes radioélectriques à destination du ou des badges situés à l'intérieur de son lobe. Pour transmettre un message du badge vers la balise il est nécessaire que le badge reçoive une onde pure de la balise pour pouvoir la moduler en réflexion vers la balise. La modulation associée au message est du type PSK. Un exemple intéressant de ce type de modulation associe à un symbole binaire 1 une transition de $\pi$ sur la phase de la porteuse en début de symbole, et associe à un symbole binaire 0 une transition de $\pi$ au début de symbole et une autre transition de $\pi$ au milieu du symbole binaire.

Cette modulation est appelée modulation BI-PHASE différentielle type S ou FMO dans la bibliographie classique. Elle présente l'intérêt de pouvoir être démodulée de manière différentielle et d'avoir un spectre ne comportant pas de composante continue.

La réception dans la balise est du type à démodulation cohérente du fait que le signal de réception correspond au signal d'émission modulé par le badge.

Les difficultés rencontrées dans une telle liaison badge vers balise (et inversement) sont les suivantes :
- dérive des horloges balise/badge (horloge de modulation à 250 Kbits/seconde non connue de la balise)
- effet doppler provoqué par la vitesse relative entre le badge et la balise. Sachant que pour une porteuse $f_o$ de 5,8 GHz et une vitesse relative V du véhicule transportant le badge atteignant 200 km/heure, l'effet doppler $f_d$ atteint :

$$f_d = \frac{2V}{\lambda} \approx 2kHz$$

où $\lambda$ est la longueur d'onde correspondant à la fréquence $f_o$ de la porteuse.

Cette fréquence apparaît comme résiduelle à la sortie du mélangeur en réception de la balise
- dynamique du signal en entrée de la chaîne de réception de la balise après réflexion sur le badge. Cette dynamique est estimée à 50 dB et comprend la variation due à la dynamique de portée et de variation due aux pertes sur le lobe d'antenne d'émission de la balise ainsi que les dispersions dues aux matériaux (pare-brise,...) ou aux conditions climatiques (pluie, neige,...).

Les demi-périodes binaires de la modulation seront considérées dans la suite de la description comme des "symboles de phase", la durée d'un symbole binaire, ou temps bit, s'exprimera par le symbole T et la durée du demi bit donc du symbole de phase par $T_2$. Au sein d'un symbole de phase, la phase du signal à l'instant t s'exprime par la formule suivante :

$$\Phi(t) = \Phi(nT_2) + 2\pi f_d(t - nT_2) + s(nT_2) \quad (1)$$

pour $nT_2 \leqq t \leqq (n + 1)T_2$

où $f_d$ correspond à la fréquence doppler, $\Phi(nT_2)$ à la phase obtenue à la fin de la demi-période (n-1), et $s(nT_2)$ au symbole de phase à la demi-période n.

Les méthodes de démodulation classiquement utilisées sont listées ci-après. Ces méthodes permettent de retrouver les symboles de phase à partir des voies I et Q correspondant respectivement à la voie en phase

portant le signal reçu par la balise en bande de base et à la voie en quadrature portant le même signal en bande de base mais déphasé de $\pi/2$.

Auparavant, il est nécessaire de regarder ce que fournit la différence des phases des signaux décalés de T, c'est-à-dire d'une durée d'un symbole binaire ou temps bit. La démodulation revient finalement à effectuer la différence des phases des signaux décalés de T, soit $\Phi(t)$- $\Phi(t-T)$.

Une première méthode connue de démodulation est dénommée "méthode par les angles". Cette méthode estime l'angle $\Phi(t)$ et effectue la différence des angles $\Phi(t)$ - $\Phi(t-T)$. Cette méthode est difficilement réalisable en analogique bien qu'évidente en théorie car l'extraction d'un angle n'est pas aisée en analogique.

Une deuxième méthode dénommée "méthode par corrélation" part du principe que ce qui importe est la fabrication de $\Phi(t)$- $\Phi(t-T)$. Elle consiste à effectuer le produit des signaux reçus décalés de T et à extraire ensuite directement $\Phi(t)$- $\Phi(t-T)$. Les inconvénients d'une telle réalisation analogique sont les suivants :
- difficulté de traiter des signaux à niveaux faibles en raison de la valeur des seuils ou offsets des multiplieurs,
- coût des multiplieur et des lignes à retard,
- appairage des chaînes sur voie I et voie Q pour éviter des erreurs de démodulation, et
- dérive en température des éléments tels que lignes à retard, multiplieurs, etc... .

Une troisième méthode de démodulation analogique, appelée "boucle de phase PLL" abréviation anglo-saxonne pour Phase Locked Loop consiste en une boucle à verrouillage de phase du type boucle de Costas.

Les inconvénients d'une telle structure sont les suivants :
- présence d'éléments analogiques complexes de mise en oeuvre, VCO abréviation anglo-saxonne pour "Voltage Controlled Oscillator", multiplieurs, etc...
- le coût dû à un grande nombre d'éléments nécessaires,
- et surtout le temps d'établissement de la chaîne pour asservir la boucle à la fréquence résiduelle pouvant être la fréquence doppler.

Rappelons qu'en début d'une réponse émanant d'un badge, l'effet doppler est inconnu et qu'une méthode étant sensible à cet effet doppler est inexploitable.

Les précédentes méthodes de démodulation utilisées dans le domaine analogique possèdent des équivalents dans le domaine numérique.

Une méthode de démodulation numérique dénommée "méthode Arctg" estime l'angle $\Phi(t)$ et établit la suite des symboles de phase par une différentiation entre $\Phi(t)$ et $\Phi(t - T)$. La structure nécessaire pour la mise en oeuvre d'un telle méthode nécessite l'emploi d'un convertisseur analogique-numérique CAN : un CAN pour la voie I et un CAN pour la voie Q de sorte à pouvoir évaluer proprement le cosinus et le sinus de l'angle donné respectivement par la voie I et la voie Q et pour accepter la dynamique des signaux en entrée, pouvant être de l'ordre de 50 dB minimum. Ceci nécessite l'utilisation de convertisseur analogique-numérique, CAN, de 8 bits à une fréquence d'échantillonnage déterminée fe. D'autre part la structure nécessite l'utilisation d'un opérateur Arctg travaillant à la même fréquence d'échantillonnage fe, soit basé sur une table de sinus ou de cosinus, soit basé sur une méthode par CORDIC abréviation anglo-saxonne pour "COordinate Rotation DIgital Computer".

La fréquence d'échantillonnage est donnée par exemple par la formule suivante :

$$fe = m.500 \text{ kHz}$$

où m est la constante de suréchantillonnage et 500 kHz le rythme des symboles de phase. Pour m = 4, fe = 2 MHz.

En conclusion, cette méthode est coûteuse à mettre en oeuvre dans le domaine numérique.

Une deuxième méthode de démodulation numérique dénommée "méthode par corrélation" consiste à effectuer des opérations de retard et de multiplication implémentées soit dans un processeur, soit dans un ASIC abréviation anglo-saxonne pour "Application Specific Integrated Circuit".

Cette méthode numérique souffre des mêmes difficultés que la précédente :
- utilisation de convertisseurs analogiques-numériques coûteux à la fréquence d'échantillonnage considérée,
- besoin d'un processeur de signal.

La méthode connue utilisant une boucle de phase numérique, ainsi d'ailleurs qu'en analogique souffre d'un temps d'asservissement important et ne peut en conséquence satisfaire certains impératifs de temps de réponse élevés. En outre dans le domaine numérique cette méthode nécessite également l'utilisation de convertisseurs analogiques-numériques.

L'invention a pour but de pallier les inconvénients précités.

A cet effet l'invention a pour objet un procédé de démodulation numérique à différentiation de phase consistant à démoduler un signal ayant subi une modulation bi-phase différentielle type S encore appelée modulation FMO, et reçu par un récepteur permettant la formation d'une première voie et d'une deuxième voie portant respectivement un signal en phase et un signal en quadrature de phase avec le signal d'entrée du récepteur, caractérisé en ce qu'il consiste à comparer les valeurs absolues des amplitudes des deux signaux de sortie des voies, et à calculer en fonction des résultats de comparaison la différence d'état du signal de sortie pris entre un instant d'échantillonnage courant et l'instant d'échantillonnage précédent, l'intervalle de temps séparant ces deux instants d'échantillonnage correspondant à un temps bit, pour restituer les informations binaires.

L'invention a également pour objet un dispositif pour la mise en oeuvre du procédé, caractérisé en ce qu'il comporte un étage de prétraitement comportant des moyens pour comparer entre elles les valeurs absolues des amplitudes des signaux de sortie, le premier moyen de comparaison permettant l'implémentation de la méthode "voie maximale" en exploitant le résultat d'exploitation de la condition issue des premiers moyens de comparaison et les deuxièmes moyens de comparaison permettant l'implémentation de la méthode "Arctg simplifiée" en exploitant le résultat d'exploitation des conditions issues des deuxièmes moyens de comparaison, des moyens pour comparer les valeurs absolues des amplitudes de chacun des signaux de sortie du premier couple de signaux de sortie à la tension d'écrétage permettant la gestion de la dynamique du signal d'entrée, et en ce qu'il comporte des moyens pour calculer la différence d'état des signaux prétraités par les moyens de prétraitement considérés entre deux temps d'échantillonnage successifs séparés d'un temps bit pour restituer les bits de phase.

L'invention a également pour objet un système de communication hyperfréquence entre des balises et des badges, comportant au moins une balise fixe émettant continuellement un signal, constitué de cycles d'ondes radioélectriques, à destination d'un ou plusieurs badges pénétrant dans le lobe d'antenne de la balise, et consistant dès l'interception d'une réponse d'identification par réflexion du signal par au moins un badge, à dialoguer avec le badge sélectionné par la balise selon un protocole déterminé, caractérisé en ce que le badge comporte un bloc "radio" permettant d'une part la réception du signal émis par la balise et d'autre part la réflexion des d'informations contenues dans le badge, un bloc analogique basse fréquence de traitement du signal reçu par le bloc "radio", un bloc de traitement numérique recevant les données traitées par le bloc analogique basse fréquence et permettant la gestion des informations échangées entre le badge et la balise selon le protocole déterminé, et un bloc d'alimentation autonome permettant une alimentation sans coupure des différents blocs constituant le badge, et en ce que la balise comporte un bloc "radio" comportant une chaîne émission et une chaîne de réception, la chaîne de réception comportant un démodulateur de phase comportant, pour s'affranchir du besoin d'un convertisseur analogique-numérique à l'entrée des voies de réception, des moyens pour comparer la valeur absolue des amplitudes des signaux de sortie des deux voies, des moyens pour calculer la différence d'état du signal pris entre l'instant d'échantillonnage courant et l'instant d'échantillonnage précédent, l'intervalle de temps séparant ces deux instants d'échantillonnage correspondant à un temps bit, et en ce que la balise comporte un oscillateur local pilotant la chaîne d'émission et la chaîne de réception simultanément, un bloc de traitement du signal mettant en forme le signal reçu du bloc "radio" et un bloc de gestion permettant de gérer des informations reçues et des informations à émettre, et en ce que le protocole de communication entre la balise et le badge, orchestré par la balise est constitué d'un cycle continuel d'ondes radioélectriques, chaque cycle étant constitué d'une phase de réveil des badges et d'une phase d'allocation permettant à la balise de choisir le badge, en le désignant par un message déterminé afin d'effectuer une transaction.

Les procédés de démodulation de signaux modulés en phase selon l'invention ont pour avantage de profiter des avantages du domaine numérique c'est-à-dire de conserver une reproductibilité des résultats, pas de réglage dû à la dérive thermique de certains composants, etc...sans ses inconvénients c'est-à-dire sans l'utilisation de convertisseurs analogiques-numériques ni de dispositifs de correction d'amplitude coûteux en place et en prix.

D'autres caractéristiques et avantages de l'invention apparaîtront ci-après à l'aide de la description faite en regard des dessins annexés qui représentent :

- la figure 1, un schéma fonctionnel de la méthode "Arctg simplifiée" selon l'invention,
- la figure 2, une représentation de la comparaison utilisée par la méthode "Arctg simplifiée" selon l'invention,
- la figure 3, un tableau récapitulatif de l'implémentation de $|x| \leq |y|$,
- la figure 4, un schéma fonctionnel de la gestion de la dynamique du signal à traiter selon l'invention,
- la figure 5, un schéma fonctionnel de la méthode de démodulation "voie maximale" selon l'invention,
- la figure 6, un dispositif pour la mise en oeuvre du procédé de démodulation selon l'invention
- la figure 7, un schéma simplifié d'un système de communication hyperfréquence selon l'invention,
- la figure 8, un chronogramme d'un cycle utilisé par un protocole de communication dans un système selon l'invention,
- la figure 9, un bloc diagramme d'un badge utilisé par le système selon l'invention, et

- la figure 10, un bloc diagramme d'une balise utilisée par le système selon l'invention.

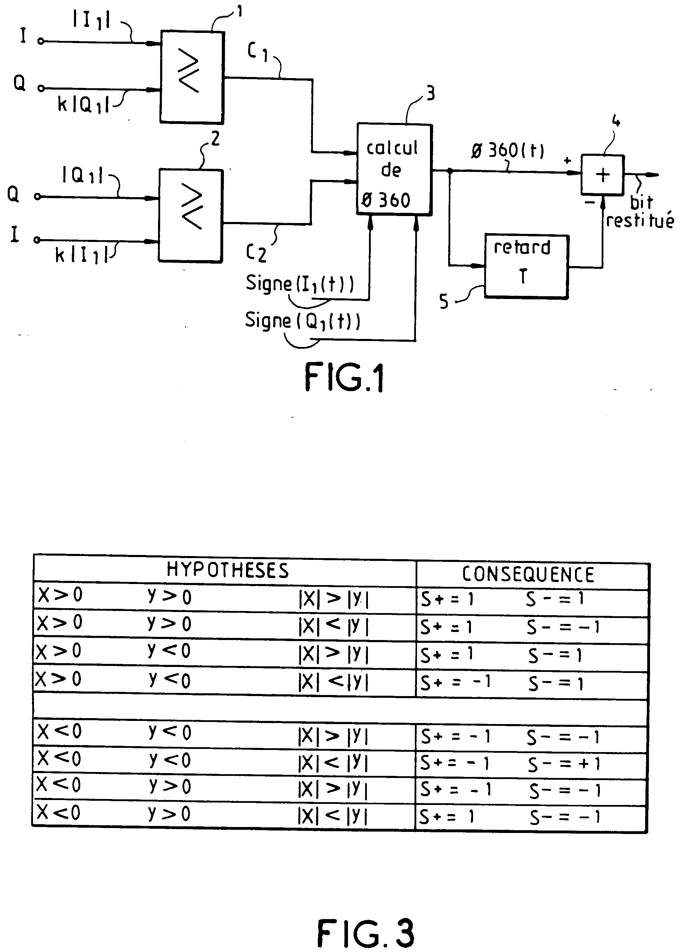

La figure 1 qui est composée des blocs fonctionnels référencés de 1 à 5 illustre la méthode "Arctg simplifiée" mise en oeuvre par l'invention. Cette méthode permet de s'affranchir des problèmes de dynamique, c'est-à-dire des contraintes apportées par un dispositif de correction d'amplitude ou un convertisseur analogique-numérique CAN. Une telle méthode, d'un coût moindre, doit toutefois maintenir un niveau de performances suffisant en démodulation. Cette méthode consiste dans une première étape à calculer la phase instantanée du signal, sur un nombre déterminé n d'états de phase, comprise entre 0 et $2\pi$, n étant égal à 8 par exemple.

Pour cela à l'instant d'échantillonnage, la phase est déterminée en comparant, dans les blocs fonctionnels 1 et 2 de la figure 1, les valeurs absolues des amplitudes portées par les voies I et Q, soit :

$$|I(t)| \text{ à } k|Q(t)|$$
$$\text{et } |Q(t)| \text{ à } k|I(t)|$$

La valeur k est déterminée par le rapport entre le cosinus et le sinus par exemple égal à $\pi/8$ pour n = 8, $\pi/8$ étant le seuil de décision, soit k = 2,5 la valeur approchée de ce rapport.

En considérant les conditions $C_1$ et $C_2$ suivantes correspondant respectivement aux résultats de la comparaison de $|I(t)|$ avec $k|Q(t)|$ dans le bloc 1 et de la comparaison de $|Q(t)|$ avec $k|I(t)|$ dans le bloc 2 :

$$C_1 = 1 \text{ si } |I| > k|Q|, \text{ sinon } C_1 = 0$$
$$C_2 = 1 \text{ si } |Q| > k|I|, \text{ sinon } C_2 = 0 \quad (1)$$

Cette comparaison est illustrée par une représentation sous la forme d'une portion de constellation à huit états de phase à la figure 2 en conservant l'exemple précédent où n = 8 et où $\pi/8$ est le seuil de décision.

L'angle $\Phi$ dans un secteur 0-90° est alors donné par la formule suivante :

$$\Phi_{90} = \left(\overline{C_1} + C_2\right)\pi/4 \quad (2)$$

Le bloc 3 calcule la phase de l'angle $\Phi$ défini dans l'intervalle 0-360° qui s'exprime par la formule suivante :

$$\Phi360 = [\text{signe}(I) * \text{signe}(Q) * (\overline{C_1} + C_2) - 2 * \text{signe}(I) + 2] * \pi/4 \quad (3)$$

Pour les différentes valeurs de signe de I et Q, les valeurs suivantes sont obtenues en appliquant la formule (3) :

$$\text{signe (I)} = +1, \text{ signe (Q)} = +1 \text{ d'où } \Phi_{360} = \Phi_{90},$$
$$\text{signe (I)} = -1, \text{ signe (Q)} = +1 \text{ d'où } \Phi_{360} = \pi - \Phi_{90},$$
$$\text{signe (I)} = -1, \text{ signe (Q)} = -1 \text{ d'où } \Phi_{360} = \pi + \Phi_{90}, \quad (4)$$
$$\text{signe (I)} = +1, \text{ signe (Q)} = -1 \text{ d'où } \Phi_{360} = -\Phi_{90},$$

L'angle $\Phi$ dans le secteur 0-360° peut donc s'exprimer comme un multiple de $\pi/4$ :

$$\Phi_{360} = n\pi/4 \quad (5)$$

pour huit états de phase, n peut prendre par exemple les valeurs -1, 0, 1, 2, 3, 4, 5 et 6.

En pratique la méthode de démodulation ne tient pas compte du facteur d'échelle $\pi/4$ et les angles sont représentés par le coefficient n codé sur 3 bits.

La méthode réalise directement le modulo $2\pi$ lors de la différentiation entre les phases des échantillons séparés d'un intervalle de temps bit. Les symboles de phase étant déterminés par la valeur de $\phi_{360}(t)$, les symboles binaires sont obtenus en effectuant dans le bloc 4 la différence entre la valeur de l'angle $\phi_{360}$ à l'instant d'échantillonnage courant et la valeur de l'angle $\phi_{360}$ à l'instant d'échantillonnage précédent c'est-à-dire à la valeur de l'angle retardé dans le bloc 5 d'un temps bit T.

Ainsi le bit restitué vaut "0" si $-\pi/2 < \Phi_{360}(t) - \Phi_{360}(t - T) < \pi/2$ et le bit restitué vaut "1" si $\Phi_{360}(t) - \Phi_{360}(t - T) > \pi/2$ ou si $\Phi_{360}(t) - \Phi_{360}(t - T) < -\pi/2$.

Les conditions $C_1 = 1$ et $C_2 = 1$ ne peuvent être vraies simultanément ; lorsque cet événement est présent un traitement d'exception est exécuté.

Une deuxième étape permet d'implémenter la comparaison $|x| > |y|$ :

La réalisation de la fonction valeur absolue présentant quelques difficultés à la fréquence d'échantillonnage utilisée, par exemple 2 MHz, l'implémentation de la comparaison $|x| > |y|$ est basée sur l'étude des signes des quantités (x + y) et (x - y), respectivement dénommées S+ et S- par la suite.

Cette étude est illustrée par le tableau de la figure 3. Ce tableau comporte dans sa partie gauche les hypothèses de départ et dans sa partie droite les conséquences sur la valeur du signe des quantités (x + y) et (x - y) respectivement dénommées S+ et S-. Le tableau de la figure 3 peut être résumé par les deux lignes suivantes :

si signe (x + y) et signe (x - y) sont tous deux égaux alors $|x| > |y|$

si signe (x + y) et signe (x - y) sont différents alors $|x| < |y|$

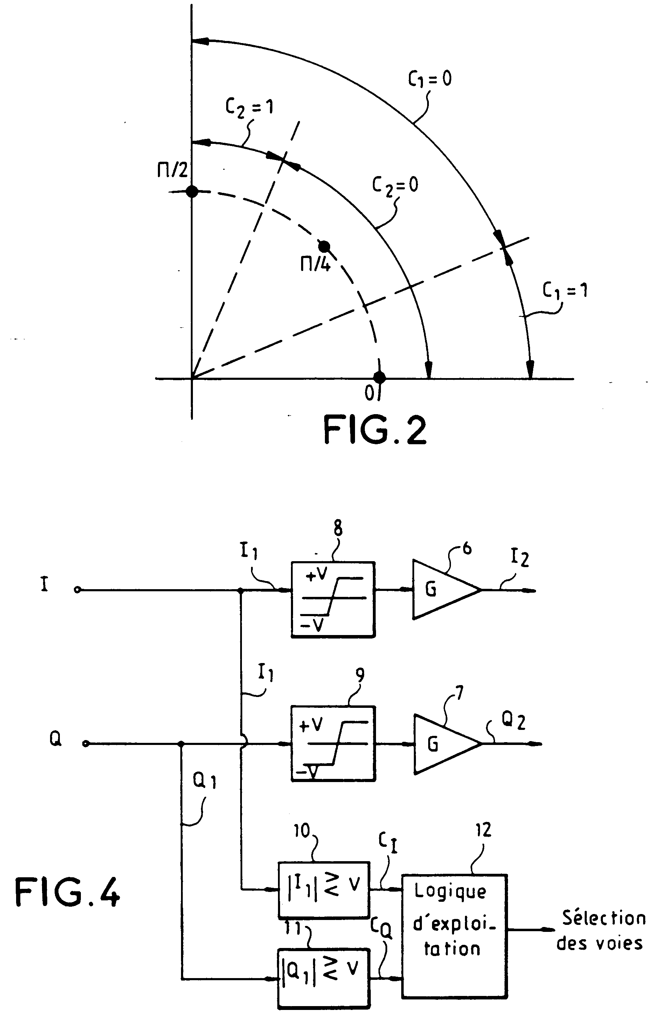

Une troisième étape concernant la gestion de la dynamique du signal à traiter est illustrée par le schéma fonctionnel composé des blocs 6 à 12 de la figure 4.

Ayant abandonné la solution classique utilisant un convertisseur analogique-numérique, il est nécessaire de trouver un mécanisme permettant d'absorber la totalité de la dynamique citée précédemment de l'ordre de 50 dB minimum.

Une chaîne avec écrétage du signal n'est pas satisfaisante pour les raisons suivantes :
- placé dans la partie radioélectrique, l'écréteur ne peut travailler efficacement vu le faible niveau de signal appliqué,
- placés dans les voies I et Q en bande de base, les écréteurs basse fréquence risquent de modifier la phase réelle du signal en saturation (45° d'erreur possible) et peuvent provoquer une décision erronée sur l'angle différencié (45° dans un sens, 45° dans l'autre d'où 90° au total).

Pour la gestion de cette dynamique, la troisième étape du procédé selon l'invention consiste à prévoir deux jeux de sortie I et Q à des niveaux différents et à fournir au module de démodulation en principe les voies I et Q à fort niveau excepté lors de la saturation de ces dernières. Dans ce cas, on injecte au module de démodulation les sorties à faible niveau.

L'étape de gestion d'amplitude selon l'invention génère donc des signaux de sorties à faible niveau $I_1$ et $Q_1$, des signaux de sorties à fort niveau $I_2$ et $Q_2$ qui correspondent en fait à $I_1$ et $Q_1$ amplifiées par les blocs 6 et 7 d'un gain G déterminé après écrétage par les blocs 8 et 9 à une tension d'écrétage $\pm V$ déterminée. Une détection par les blocs 10 et 11 de la saturation des valeurs absolues des amplitudes de $I_1$ et de $Q_1$ et l'exploitation par le bloc 12 de cette détection permet de fabriquer respectivement les conditions $C_I$ et $C_Q$. Lorsque le signal porté par l'une des deux voies au moins est en limite de saturation, le choix se porte sur le traitement de $I_1$ et $Q_1$ en démodulation. La fonction d'écrétage insérée dans chaque voie permet d'éviter la saturation des amplificateurs et le temps de dépolarisation qui en découle.

Une application numérique est donnée ci-après à titre d'exemple non limitatif :

En reprenant la dynamique de 50 dB précédente et en partant de l'hypothèse d'un rapport signal à bruit maintenu au-dessus de 14 dB, ce qui signifie que le niveau des signaux en démodulation doit être suffisamment élevé de sorte à ce que les offsets des amplificateurs ou le bruit propre des composants ne dégradent ce rapport signal à bruit,
- les voies en phase I et en quadrature Q portant respectivement les signaux de sortie $I_1$ et $Q_1$ correspondent à un signal d'entrée dont le niveau d'amplitude minimale est de 32mV et le niveau d'amplitude maximale est de 10V,
- les voies en phase et en quadrature respectivement $I_2$ et $Q_2$ correspondent aux voies $I_1$ et $Q_1$ amplifiées de 12dB ce qui correspond à un facteur 4 en amplitude. Le niveau d'amplitude du signal porté par ces voies est compris entre 128 mV et 10 V en tension d'écrétage.

L'exploitation du couple $(I_2, Q_2)$ est basique, c'est-à-dire que le couple $(I_1, Q_1)$ n'est exploité que lorsque le couple $(I_2, Q_2)$ est en écrétage c'est-à-dire lorsqu'il a atteint la valeur de 10 v. La commutation est décidée sur scrutation du couple $(I_1, Q_1)$ et la comparaison de leur amplitude avec la valeur de seuil $V = \pm 2,5$ V qui correspond à la tension d'écrétage maximale de $\pm 10V$ divisée par le facteur 4. Si l'un des deux signaux $I_1$ et $Q_1$ est supérieur en valeur absolue à 2,5 V alors le couple $(I_1, Q_1)$ est exploité et le couple $(I_2, Q_2)$ alors en saturation est inexploitable.

En résumé, la gestion de la dynamique consiste en :
- une comparaison par le bloc 10 de $I_1$ aux valeurs de seuil V=+2,5 V et -2,5 V. La condition résultante, appelée $C_I$ vaut 0 lorsque l'amplitude $I_1$ est comprise entre V=+2,5 V et -2,5 V, et 1 autrement,
- une comparaison de $Q_1$ par le bloc 11 aux valeurs de seuil V=+2,5 V et -2,5 V. La condition résultante, appelée $C_Q$ vaut 0 lorsque l'amplitude de $Q_1$ est comprise entre V=+2,5 V et -2,5 V, et 1 autrement,
- un écrétage par les blocs 8 et 9 sur chaque voie, sur $I_1$ et $Q_1$, le niveau d'écrétage V valant +2,5 V en positif et -2,5 V en négatif, et
- une amplification par les blocs 6 et 7 de gain 12 dB sur les deux voies en sortie des blocs écréteurs 8 et 9 à + ou -2,5V sur $I_1$ et $Q_1$, fournissant ainsi les signaux $I_2$ et $Q_2$.

Par voie de conséquence, la démodulation selon la méthode "Arctg simplifiée" doit pouvoir être effectuée sur le couple $(I_1, Q_1)$ et sur le couple $(I_2, Q_2)$. Elle nécessite les opérations suivantes :
- une comparaison de $|I_1|$ avec $k|Q_1|$ donnant la condition $C_1$,
- une comparaison de $|Q_1|$ avec $k|I_1|$ donnant la condition $C_2$,
- une comparaison de $|I_2|$ avec $k|Q_2|$ donnant la condition $C'_1$,

6

- une comparaison de $|Q_2|$ avec $k|I_2|$ donnant la condition C'$_2$,
- une détermination du signe de $I_1$, et
- une détermination du signe de $Q_1$.

Les opérations de comparaison $|x| > k|y|$ sont réalisées conformément à l'examen du signe de (x + ky) et du signe de (x-ky) représenté par le tableau de la figure 3.

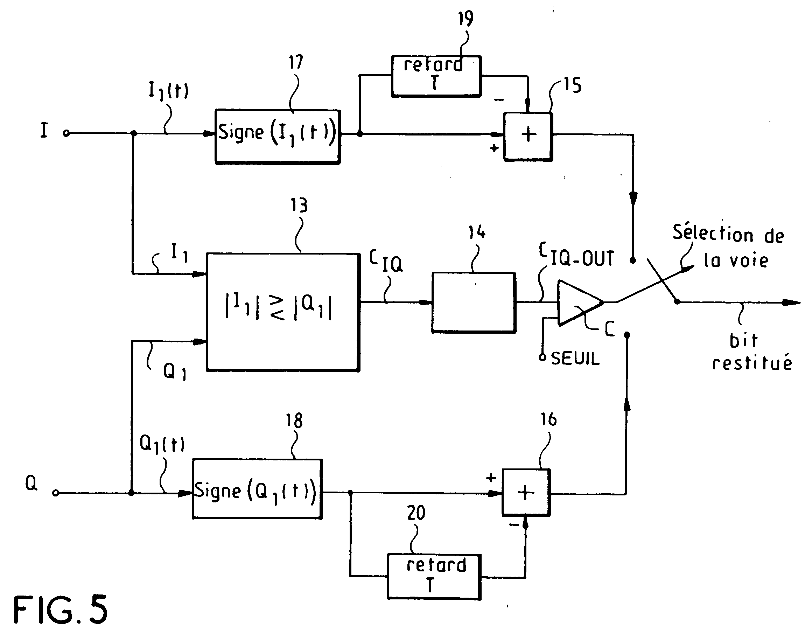

Une deuxième méthode utilisée par le procédé de démodulation selon l'invention et dénommée "démodulation sur voie maximale" consiste à effectuer la démodulation sur la voie portant le signal présentant instantanément la plus grande amplitude absolue. Cette deuxième méthode est illustrée au moyen des blocs 13 à 20 du schéma fonctionnel de la figure 5. Pour cela la valeur absolue de 'amplitude de $I_1$ est comparée à la valeur absolue de l'amplitude $Q_1$ dans le bloc 13 :

$$|I_1| > |Q_1| \text{ ou l'inverse.}$$

Le test effectué par le bloc 13 est réalisé en exploitant les signes de $(I_1 + Q_1)$ et de $(I_1 - Q_{1)}$ conformément à la fonction "valeur absolue" définie précédemment. Le test 13 précédent débouche sur une nouvelle condition $C_{IQ}$ indiquant si $|I_1|$ est supérieure à $|Q_1|$ ou l'inverse.

$C_{IQ} = 1$ si le signe de $(I_1 + Q_1)$ et le signe de $(I_1 - Q_1)$ ont la même valeur soit $|I_1| > |Q_1|$.

$C_{IQ} = 0$ dans l'autre cas.

En fait la commutation sur les voies I et Q ne doit pas se faire instantanément de sorte à ne pas réagir sur des pointes de bruit. Pour cela un bloc 14 de filtrage suivi d'un comparateur C est disposé sur la sortie du bloc de comparaison 13. Le bloc 14 de filtrage comporte par exemple un filtre du premier degré. Ce filtre 14 est de la forme suivante :

$$C_{IQ \text{ - out}}(n) = \lambda * C_{IQ \text{ - out}}(n - 1) + (1 - \lambda) * C_{IQ}(n)$$
$$\text{avec } \lambda = 7/8 \text{ et } C_{IQ} = 0 \text{ ou } 1 \quad (6)$$

La réponse asymptotique face à une entrée en échelon d'amplitude 1 converge vers 1, le filtre 14 est donc de gain unitaire.

Pour commuter, le filtre 14 a besoin de cinq entrées successives $C_{IQ}(n)$ à $C_{IQ}(n+5)$ ayant la même valeur. La commutation s'effectue à l'occurrence (n+6). La condition $C_{IQ\text{- out}}$ étant comprise entre 0 et 1, la valeur de seuil SEUIL du comparateur C est donc égale à 1/2. La voie Q est sélectionnée quand $C_{IQ\text{- out}} \leqq 1/2$ et la voie I est sélectionnée quand $C_{IQ\text{- out}} > 1/2$.

Le bloc de filtrage 14 peut être remplacé par un système de comptage-décomptage.

Quand la condition $C_{IQ}$ vaut 1, le compteur est incrémenté et saturé à une valeur déterminée MAX. Quand $C_{IQ}$ vaut 0, le compteur est décrémenté et saturé vers le bas à une valeur déterminée -MAX. La valeur de sortie $C_{IQ\text{- out}}$ du compteur est alors comparée par le comparateur C à la valeur 0. Si la valeur de $C_{IQ\text{- out}}$ est supérieure ou égale à 0, la voie I est sélectionnée sinon la voie Q est sélectionnée. L'implémentation du filtre se résume donc à un compteur-décompteur ; le temps de commutation étant contrôlé par la valeur déterminée MAX.

A l'opposé de la méthode "Arctg simplifiée", la saturation sur les voies I et Q n'affecte pas la validité de la démodulation qui est basée sur l'exploitation du signe de la voie maximale instantanément. En conséquence, il faut tenir compte des signaux $I_1$ et $Q_1$ tant pour la démodulation que pour la sélection de la voie maximale.

La démodulation s'effectue sur chaque voie I et Q en comparant par les blocs 15 et 16 le signe fourni par les blocs 17 et 18 de l'échantillon de signal porté par la voie courante sélectionnée avec le signe de l'échantillon de signal retardé par les blocs 19 et 20 d'un temps bit T. Cet échantillon de signal doit appartenir à la même voie que l'échantillon de signal courant même si une nouvelle sélection de voie vient à s'effectuer entre deux temps bits T consécutifs. Le résultat de la comparaison effectuée par les blocs 15 et 16 permet alors la restitution des symboles binaires, une seule des deux sorties étant sélectionnée à chaque instant.

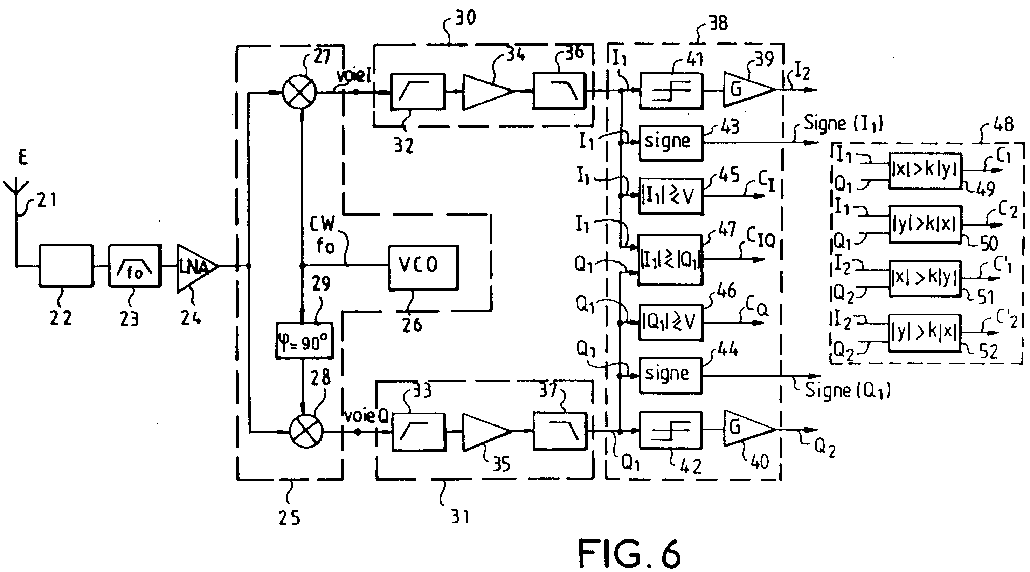

Un dispositif permettant la mise en oeuvre des deux méthodes de démodulation précédemment décrites selon l'invention est illustré à la figure 6.

Ce dispositif constituant un récepteur radiofréquence homodyne comporte une antenne de réception 21 d'un signal modulé bi-phase E. La sortie de l'antenne 21 est couplée à un dispositif 22 de protection dont la sortie est couplée à l'entrée d'un filtre d'antenne 23 centré sur la porteuse $f_0$. Le signal E filtré après amplification par un amplificateur faible bruit 24 est injecté à l'entrée d'un dispositif 25 créant les voies I et Q en bande de base. Ce dispositif 25 comporte par exemple un oscillateur VCO 26. Ce VCO 26 délivre en sortie un signal continu CW et génère le signal émis. La sortie du VCO 26 est couplée par une première entrée d'opérande au mélangeur 27 de la voie I. Elle est également couplée par une première entrée d'opérande au mélangeur 28 de la voie Q après déphasage de 90° par un déphaseur 29. La voie Q est ainsi déphasée de 90° par rapport à la voie I. Les deuxièmes entrées d'opérande des mélangeurs 27 et 28 respectives à la voie I et la voie Q reçoivent le même signal issu de la sortie de l'amplificateur faible bruit 24. La sortie de chaque mélangeur 27 et 28 respective à la voie I et à la voie Q est couplée respectivement à l'entrée d'un étage de filtrage canal 30 et 31. Chaque étage de filtrage 30 et 31 comporte un filtre passe-haut 32 et 33 couplé à un amplificateur 34 et 35 de gain d'environ 52 dB pour correspondre à l'application numérique de l'exemple précédent.

La sortie de chaque amplificateur 34 et 35 est couplée à l'entrée d'un filtre passe-bas 36 et 37. Les sorties respectives à chaque dispositif de filtrage 36 et 37 eux-mêmes respectifs à la voie I et la voie Q, sont couplées à l'entrée d'un étage 38 de prétraitement permettant entre autre la gestion de la dynamique au signal d'entrée E. Chaque voie I et Q est dissociée respectivement en deux voies portant chacune les signaux $I_1$, $I_2$ et $Q_1$, $Q_2$. Les voies portant respectivement les signaux $I_2$ et $Q_2$ correspondent aux voies portant les signaux $I_1$ et $Q_1$ amplifiés par un amplificateur 39 et 40 de gain déterminé G, par exemple de 12dB, après écrétage par un moyen d'écrétage 41 et 42.

Le moyen d'écrétage 41 et 42 a pour but d'éviter la saturation des amplificateurs 39 et 40 et un temps de dépolarisation qui en découle.

Les voies portant les signaux $I_1$ et $Q_1$ comportent respectivement un moyen 43 et 44 de détermination du signe des signaux $I_1$ et $Q_1$. Les valeurs absolues des signaux $I_1$ et $Q_1$, $|I_1|$ et $|Q_1|$, sont comparées respectivement à une même valeur de seuil V et son opposé négatif -V par un moyen 45 et 46 utilisé comme détecteur de saturation générant respectivement la condition $C_I$ et $C_Q$. Les deux valeurs absolues $|I_1|$ et $|Q_1|$ sont comparées l'une à l'autre par un moyen 47 conformément au procédé de la figure 5 pour générer la troisième condition $C_{IQ}$.

Les informations obtenues en sortie de cet étage de prétraitement 38 sont : $I_1$, $Q_1$, $I_2$, $Q_2$ signe $(I_1)$, signe $(Q_1)$, $C_I$, $C_Q$ et $C_{IQ}$.

Les informations signe $(I_1)$, signe $(Q_1)$, et la condition $C_{IQ}$ sont ensuite traitées par un dispositif de traitement spécifique d'informations logiques non représenté dédié à la démodulation par exemple un FPGA abréviation anglo-saxonne pour "Field Programmable Gate Array" permettant la démodulation "voie maximale". Les informations $I_1$, $Q_1$, $I_2$, et $Q_2$ sont transmises à un moyen 48 faisant partie des moyens de prétraitement 38 et permettant l'implémentation de moyens de comparaison suivants conformément au procédé de la figure 1 :

$|I_1| > k|Q_1|$, 49, délivrant la condition $C_1$,
$|Q_1| > k|I_1|$, 50, délivrant la condition $C_2$,
$|I_2| > k|Q_2|$, 51, délivrant la condition $C'_1$, et
$|Q_2| > k|I_2|$, 52, délivrant la condition $C'_2$.

Les informations $C_1$, $C_2$ et $C'_1$ et $C'_2$ sont ensuite traitées par le même FPGA, ou un dispositif identique, pour la démodulation "Arctg simplifiée". Cette démodulation bénéficie en outre de la gestion de la dynamique effectuée dans l'étage de prétraitement 38.

Pour gérer la dynamique du signal d'entrée E, l'étage de prétraitement 38 partage la dynamique du signal d'entrée E en deux parties. Une répartition de cette dynamique correspondant à l'application numérique de l'exemple précédent est donnée ci-après :

Une première partie concerne les niveaux du signal d'entrée compris entre -97 dBm à -59dBm pour lesquels l'étage de prétraitement 38 sélectionne en sortie les voies $I_2$ et $Q_2$ et dont le niveau du signal porté par ces voies se trouve compris dans la plage 128 millivolts à 10 volts.

La seconde partie concerne les niveaux du signal d'entrée compris entre -59 dBm à -47 dBm pour lesquels l'étage de prétraitement 38 sélectionne en sortie les signaux $I_1$ et $Q_1$ et dont le niveau du signal porté par les voies se trouve compris dans la plage 2,5 V à 10 V.

L'étage de prétraitement 38 permet donc, moyennant l'adjonction d'un mécanisme simple de commutation non représenté, de s'affranchir de la dynamique des signaux d'entrée.

Selon un autre mode de réalisation d'un dispositif selon l'invention et non représenté, le dispositif de la figure 6 peut être adapté pour une réception hétérodyne en remplaçant par exemple les éléments 22, 23 et 24 par une chaîne de transposition de fréquence.

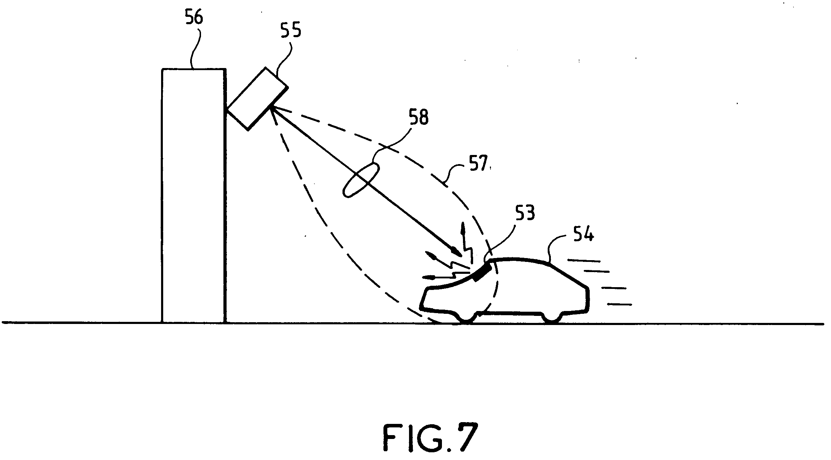

Un système de communication hyperfréquence selon l'invention permettant la lecture et l'écriture entre des balises et des badges en tenant compte des impératifs et des inconvénients cités dans l'art antérieur est décrit schématiquement par la figure 7.

Dans ce système un badge 53 est disposé sur le pare-brise d'un véhicule 54 situé par exemple à un mètre du sol. Ce badge 53 comporte soit une somme programmée, comme les cartes de téléphone, soit le numéro de carte ou de compte bancaire du propriétaire de la carte. Ce système comporte également une balise fixe 55 disposée sur un portique 56 par exemple de type portique supportant des panneaux indicateurs de direction et située par exemple à une hauteur d'environ 6 mètres, et inclinée de 40° environ par rapport à la verticale du portique 56. Le lobe 57 d'antenne d'émission de la balise 55 est ainsi orienté pour intercepter chaque véhicule 54 pénétrant dans le champ d'action de la balise 55. Sur des voies de circulation multiples il doit exister une balise 55 par voie de circulation. Les balises des voies impaires émettent en alternance avec les balises des voies paires dans le cas d'utilisation d'ondes électromagnétiques, et les lobes d'antennes des balises débordent légèrement sur les voies adjacentes. Un protocole 58 de communications entre la balise 55 et le badge 53 est orchestré par la balise 55. Celle-ci émet des cycles continus d'ondes radioélectriques et dès qu'un badge 53 intercepté dans le lobe 57 renvoie l'identification demandée par la balise 55, la communication entre la balise 55 et le badge 53 sélectionné s'établit suivant protocole 58.

Chaque cycle est constitué d'une phase de réveil du ou des badges 53, et d'une phase d'allocation.

La phase de réveil est utilisée pour obliger le ou les badges 53 à s'identifier, alors que la phase d'allocation permet à la balise 55 de choisir le badge 53, en le désignant par un message déterminé, avec lequel elle désire effectuer une transaction. Les badges 53 sont engagés tour à tour lors de leur passage dans le lobe 57 d'antennes de la balise 55.

Dans une telle communication le badge 53 est passif en émission, c'est-à-dire qu'il ne comporte pas d'émetteur et ce principalement pour des raisons de consommation mais transmet par réflexion, notamment par rétrodiffusion directe, un signal à la balise 55.

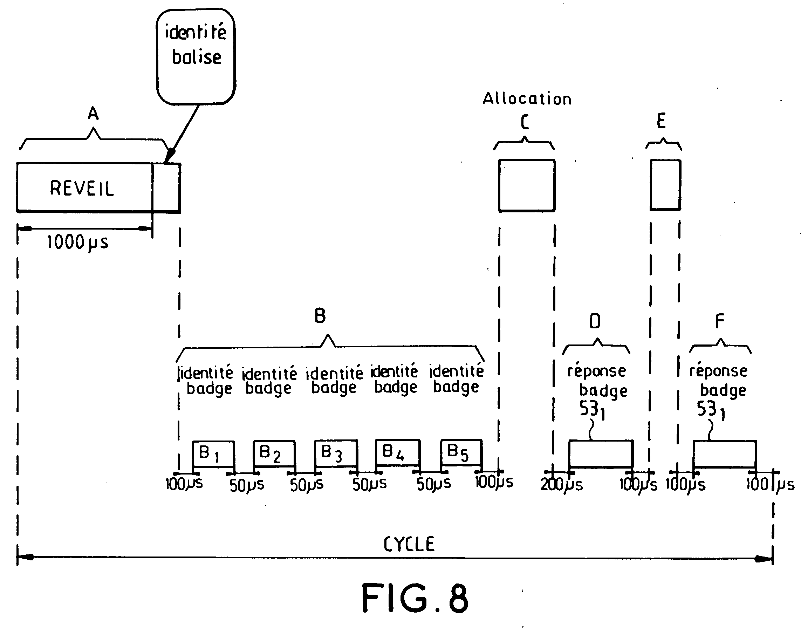

Le chronogramme de la figure 8 illustre un exemple de cycle utilisé par un protocole de communication dans un système selon l'invention.

Le cycle est composé de six séquences consécutives A, B, C, D, E, et F. Les lignes supérieure et inférieure de ce cycle correspondent respectivement au dialogue entre la balise 55 et le ou les badges 53 et au dialogue entre le ou les badges 53 et la balise 55.

La séquence A démarre le cycle et permet à la balise 55 d'envoyer son identification à destination du ou des badges 53 présents dans son lobe d'antenne 57. Cette identification est précédée d'un espace temporel réservé, en début de séquence A, pour la transmission d'un signal de réveil spécifique.

La séquence B correspond à la réponse du ou des badges 53 se trouvant dans le lobe d'antenne 57 de la balise 55. Comme le ou les badges 53 sont passifs en émission, la balise 55 émet pendant la phase B un signal CW pur. D'autre part comme plusieurs badges 53 peuvent être présents en même temps dans le lobe d'antenne 57, une méthode d'accès à répartition aléatoire temporelle est pratiquée :

A cet effet, l'intervalle B est décomposé en cinq sous-intervalles élémentaires $B_1$ à $B_5$. Chaque badge 53 tire un nombre aléatoire entre 1 et 5 et répond dans le sous-intervalle tiré. Il est ainsi possible dans un grand nombre de cas de différencier les badges 53 présents dans un même lobe d'antenne 57 grâce à ce tirage.

Dans le cas où une collision survient, c'est-à-dire un tirage du même nombre par deux badges 53 différents, la réponse globale est inintelligible et inexploitée par la balise 55, un tirage différent dans le cycle suivant permet alors de distinguer ces badges.

La phase C permet à la balise 55 d'indiquer au badge 53 qu'elle va entamer une séquence de transaction. C'est le début de la phase d'allocation. L'identification du badge est alors renvoyée vers la balise 55 par une réflexion diffuse.

Dans la phase D seul le badge 53 concerné répond par exemple le badge $53_1$ ayant tiré le nombre 1. La phase E correspond à une autre séquence d'allocation par la balise 55. Généralement le même badge $53_1$ est sélectionné, seul le service demandé diffère. La phase F est la réponse du badge $53_1$ concerné à l'allocation effectuée dans la phase E et le même cycle reprend ensuite de la même façon.

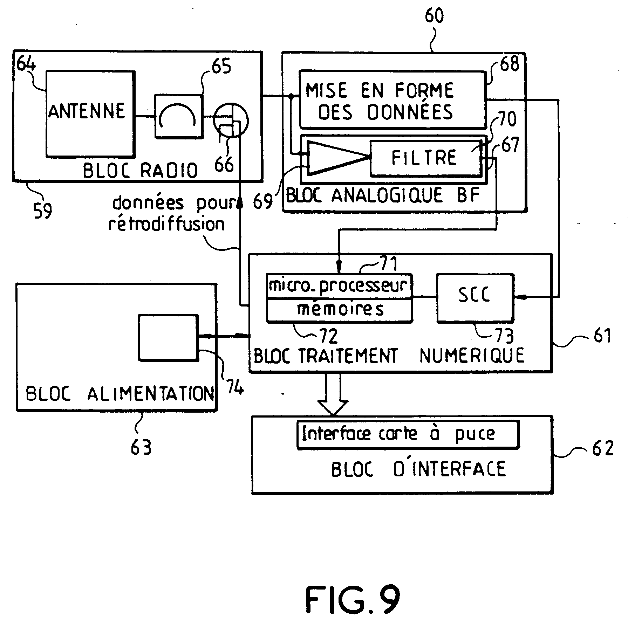

Un bloc diagramme du badge 53 utilisé par le système de communication selon l'invention est illustré à la figure 9. le badge 53 comporte un bloc "radio" 59 couplé à un bloc analogique basse fréquence 60. Le bloc analogique basse fréquence 60 est couplé à un bloc de traitement numérique 61 qui transmet les données au bloc "radio" 59 pour la rétrodiffusion.

Le bloc de traitement numérique 61 est couplé en outre à un bloc d'interface 62. Un bloc d'alimentation 63 constitué par exemple d'une ou plusieurs piles est également couplé aux différents blocs du badge 53. Le bloc "radio" 59 comprend une antenne 64 gravée, de type "patch" par exemple, couplé à un réseau d'adaptation et de filtrage 65. Un transistor à effet de champ FET 66 abréviation anglo-saxonne pour "Field Effect Transistor" couplé en sortie du réseau d'adaptation et de filtrage 65 assure la détection de la modulation en phase réveil et en mode écriture et la modulation de phase de l'onde pure émise par la balise 53 en mode lecture.

Le circuit d'adaptation et de filtrage 65 a pour fonction d'adapter le transistor FET 66 sur l'antenne 64 et de procurer un filtrage suffisant pour qu'un brouilleur ne désensibilise pas le badge 53 en mode réveil ou écriture.

Le transistor 66 assure en mode lecture la modulation de phase à deux états de l'antenne 64. En présence d'un message à 250 Kbits par seconde codé bi-phase, l'écart de phase entre les deux états est de 180° environ. L'ensemble antenne 64, circuit d'adaptation 65 et modulateur 66 est tel que le rapport entre l'onde pure incidente et l'onde modulée émise est inférieur à environ 2dB en présence de la modulation bi-phase de 250 Kbits par seconde.

Le bloc analogique basse fréquence 60 est constitué de deux chaînes parallèles. Une chaîne de traitement des signaux de réveil 67 et une chaîne de mise en forme 68 des signaux à 250 Kbits par seconde émis par la balise 55.

La chaîne de réveil 67 est constituée par un amplificateur à faible bruit 69 sélectif centré sur la fréquence de réveil suivi d'un dispositif 70 qui effectue un filtrage digital du signal de réveil et dont la sortie rend actif le bloc de traitement numérique 61. Le dispositif 70 est nécessaire pour éviter que la réception d'un signal AM parasite modulé par un signal BF sous harmonique de la fréquence de réveil ne cause un réveil intempestif du badge 53. Le bloc de traitement numérique 61 du badge 53 assure le pilotage des fonctions d'un ASIC non représenté telles que la programmation de l'état émission-réception, la génération des signaux de gestion alimentation etc.. Lors de l'insertion de la carte à puce, non représentée, dans le bloc d'interface 62 du badge 53, les informations qu'elle contient sont transférées dans une mémoire non volatile du badge 53. Ces données seront conservées jusqu'à l'occurrence de la transaction suivante. Une fois modifiées par l'application elles sont à nouveau dirigées vers la carte à puce. Le bloc 61 gère également la liaison badge 53-balise 55 suivant un protocole 58 de liaison du type précédemment décrit. Le bloc de traitement numérique 61 supporte un ou plusieurs logiciels applicatifs et permet conjointement l'activation d'une éventuelle interface utilisateur 62.

Le bloc de traitement numérique 61 comporte un microprocesseur ou micro-contrôleur 71 et un bloc mémoire 72. La quantité de mémoire doit être suffisante avec une bonne marge de sécurité pour supporter le protocole de liaison des données 58 et un logiciel d'application. Le bloc de traitement numérique 61 comporte également un contrôleur de communication 73 ou SCC abréviation anglo-saxonne pour "Serial Communication Controler" couplé au microprocesseur 71. Ce contrôleur 73 reçoit en entrée les données mises en forme par le bloc analogique BF 60. Le contrôleur 73 est capable de supporter un ensemble de fonctions HDLC abréviation anglo-saxonne pour "High Level Data Link Control" de niveau 1 tel que défini par le modèle OSI abréviation anglo-saxonne pour "Open System Interconnection" dans la norme CCITT abréviation de "Comité Consultatif International du Téléphone et des Télécommunications".

Un "timer" numérique externe non représenté peut être déclenché à partir d'un port du microprocesseur 71 et permettre de forcer la mise en sommeil du badge 53 pendant un temps déterminé afin d'éviter une usure rapide de la pile par exemple en cas de stationnement prolongé sous un portique 56 ou d'embouteillage dans le cas du télépéage. La valeur de ce "timer" doit être suffisamment faible pour ne pas interdire une transaction dans le cas de portiques 56 proches, c'est-à-dire de sections à péage continu en sections urbaines. Une valeur de 6 secondes correspondant à environ 200 mètres parcourus à 110kms/heure semble raisonnable. Le bloc d'interface 62 comportant une interface carte à puce conforme à la norme ISO 7 816 abréviation anglo-saxonne pour "International Standardization Organization" est muni d'un contact de présence de cartes permettant entre autre la détection d'anomalies en cas de retrait frauduleux de la carte. Le bloc d'alimentation 63 comporte par exemple deux piles au lithium de 3 V accessibles de l'extérieur pour un remplacement par l'utilisateur du badge.

Un dispositif 74 de maintien des informations internes pendant au moins 5 minutes est prévu lors du changement des piles. Il est admis que pendant cette opération aucune transaction ne peut avoir lieu. Un dispositif de contrôle des piles, non représenté, peut être prévu de manière optionnelle pour fournir au microprocesseur 71 une information de piles à remplacer.

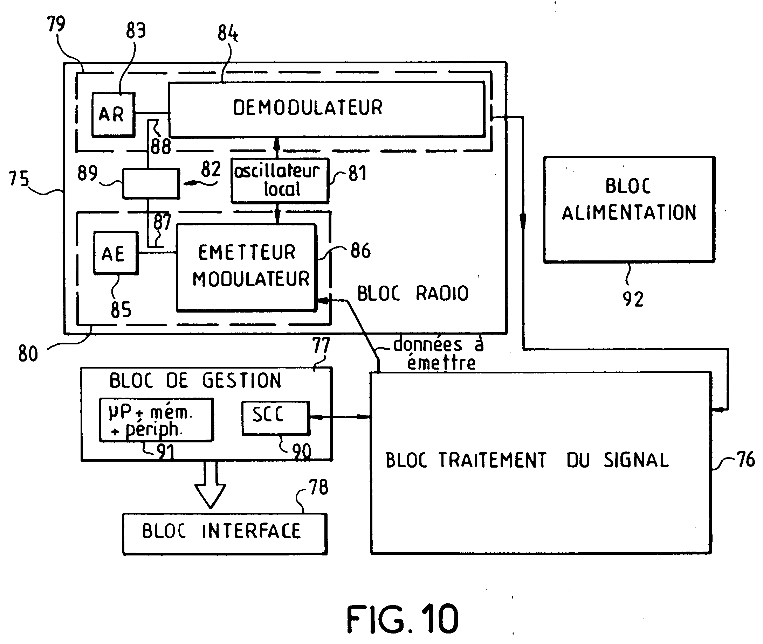

Une balise 55 utilisée par le système de communication, selon l'invention est illustrée par le bloc diagramme de la figure 10.

La balise 55 comporte un "bloc radio" 75 couplé à un bloc de traitement du signal 76 lui-même couplé à un bloc de gestion 77 .Le bloc de gestion 77 communique avec l'exploitant-utilisateur via un bloc interface 78. Le bloc "radio" 75 comporte une chaîne de réception 79, une chaîne d'émission 80, un oscillateur de fréquence fixe 81 et un dispositif de test 82.

La chaîne de réception 79 comporte une antenne de réception 83AR couplée à un démodulateur de phase 84. Le démodulateur 84 est à démodulation directe en I et Q avec la même fréquence émission. Le démodulateur de phase 84 utilise un procédé de démodulation différentielle. Le démodulateur 84 étant identique au dispositif pour la mise en oeuvre du procédé de démodulation décrit précédemment il ne sera donc pas redécrit.

La chaîne d'émission 80 comporte une antenne d'émission 85AE couplée à un émetteur de puissance 86 modulable en amplitude. L'oscillateur local 81 pilote la chaîne d'émission 80 et de réception 79 simultanément. Pour assurer la stabilité de la fréquence émise, l'oscillateur 81 est asservi à l'aide d'une boucle de phase et d'un quartz non représenté. Le quartz doit pouvoir être facilement changé dans le cas d'un réseau de balises multifréquences. L'oscillateur 81 doit être insensible aux bruits sonore, aux brouilleurs électriques, aux vibrations dues par exemple au vent, aux bruits des moteurs, klaxons, sirènes, vibrations diverses etc.... Il peut être réalisé, par exemple, par un VCO. L'oscillateur de référence à quartz doit présenter un faible bruit de phase et d'amplitude pour ne pas ramener de bruit de phase au niveau du VCO.

Le dispositif de test 82 permet de vérifier le bon fonctionnement des chaînes de réception 79 et d'émission 80. Une séquence de tests peut être déclenchée automatiquement ou manuellement.

Le dispositif de test 82 comporte un coupleur émission 87 avec un atténuateur non représenté, un coupleur réception 88 avec un atténuateur non représenté, un modulateur de phase 89 inséré entre les deux coupleurs 87 et 88 recevant une séquence numérique bi-phase à 250 Kbits par seconde de test. Les atténuateurs sont calibrés de manière à pouvoir tester la sensibilité de la chaîne de réception 79.

Le bloc de traitement de signal 76 effectue notamment la synchronisation trame et bit. Il fournit au bloc de gestion 77 un lien virtuel, en couche 1 selon le modèle OSI, avec une entité communicante . Pour ce faire, il assure les fonctions HDLC de niveau 1, compatibles avec celles effectuées au niveau du badge 53.

Ce bloc 77 est réalisé à partir d'un contrôleur de communication SCC 90 rapide du commerce éventuellement assisté par un circuit PLD non représenté, abréviation anglo-saxonne pour "Programmable Logic Device", pour le codage bi-phase.

Le bloc de gestion 77 est le coeur de la balise 55. Il a pour rôle :

- de traiter la couche liaison de données avec chacune des entités communicantes, y compris la reprise sur erreur,
- de supporter le logiciel d'application et les impératifs qui s'y rapportent en particulier le cryptage en temps réel des données et éventuellement la recherche dans les diverses listes de badges 53 utilisés pour l'application,
- de piloter le bloc interface 78 avec l'extérieur,
- d'assurer les fonctions d'autotest et de maintenance préventive de la balise 55.

Le bloc de gestion 77 comporte également un noyau 91 traditionnel à microprocesseur, mémoires et périphériques. Le bloc interface 78 assure la liaison entre le bloc de gestion 77 et le réseau intérieur d'interconnexion entre les balises 55 et des unités de contrôle non représentées. La balise 55 comporte en outre un bloc d'alimentation 92 alimenté par le secteur monophasé de 220 V, 50 Hz. Il permet de générer les différentes tensions continues nécessaires à l'alimentation des différents blocs composant la balise 55.

## Revendications

1. Procédé de démodulation numérique à différentiation de phase consistant à démoduler un signal ayant subi une modulation bi-phase différentielle type S encore appelée modulation FMO, et reçu par un récepteur permettant la formation d'une première voie (I) et d'une deuxième voie (Q) portant respectivement un signal ($I_1$) en phase et un signal ($Q_1$) en quadrature de phase avec le signal d'entrée du récepteur, caractérisé en ce qu'il consiste à comparer les valeurs absolues des amplitudes des deux signaux de sortie des voies (I et Q), et à calculer en fonction des résultats de comparaison la différence d'état du signal de sortie pris entre un instant d'échantillonnage courant (t) et l'instant d'échantillonnage précédent (t-T), l'intervalle de temps séparant ces deux instants d'échantillonnage correspondant à un temps bit (T), pour restituer les informations binaires.

2. Procédé selon la revendication 1, caractérisé en ce qu'il consiste à comparer respectivement (1 et 2) aux instants d'échantillonnage la valeur absolue de l'amplitude du signal ($|I_1|$) porté par la première voie (I) à la valeur absolue de l'amplitude du signal ($|Q_1|$) porté par la deuxième voie (Q) à un rapport près (k) défini par rapport à un seuil de décision déterminé, et la valeur absolue de l'amplitude du signal ($|Q_1|$) porté par la deuxième voie (Q) à la valeur absolue de l'amplitude du signal porté par la première voie (I) au même rapport près (k), le résultat de chacune des deux comparaisons (1 et 2) donnant respectivement une première condition ($C_1$) déterminée et une deuxième condition ($C_2$) déterminée, et en fonction de l'état de ces deux conditions ($C_1$ et $C_2$), et du signe du signal (signe ($I_1$) et signe ($Q_1$)) porté respectivement par chacune des deux voies (I et Q), à restituer (3) la phase ($\Phi_{360}(t)$) du signal donnant le symbole de phase correspondant, et à soustraire (4) la phase du signal à l'instant d'échantillonnage courant ($\Phi_{360}(t)$), retardé (5) d'une durée (T), à la phase du signal à l'instant d'échantillonnage courant ($\Phi_{360}(t)$), le résultat de la soustraction permettant d'obtenir le signal démodulé.

3. Procédé selon l'une quelconque des revendications 1 et 2, caractérisé en ce qu'il consiste, pour la prise en compte de la dynamique du signal d'entrée du récepteur, à générer un deuxième couple de signaux de sortie ($I_2$, $Q_2$) obtenu, après écrétage (8 et 9) à une tension d'écrétage déterminé (V) et amplification (6 et 7) d'un gain déterminé (G), à partir d'un premier couple de signaux de sortie ($I_1$, $Q_1$), les deux signaux ($I_1$ et $Q_1$) du premier couple ($I_1$, $Q_1$) étant délivrés respectivement par la première voie (I) et la deuxième voie (Q), à comparer (10 et 11) la valeur absolue de l'amplitude de chacun des deux signaux ($|I_1|$ et $|Q_1|$) du premier couple de signaux ($I_1$, $Q_1$) à la tension d'écrétage (V), le résultat de la comparaison (10 et 11) donnant respectivement une première condition ($C_I$) déterminée et une deuxième condition ($C_Q$) déterminée, et à sélectionner en fonction des résultats d'exploitation de ces conditions ($C_I$ et $C_Q$) par une logique d'exploitation déterminée (12), soit le premier couple de signaux de sortie ($|I_1|$, $|Q_1|$) soit le deuxième couple de signaux de sortie ($|I_2|$, $|Q_2|$), et en ce qu'il consiste à attribuer respectivement à chaque couple une partie de la dynamique du signal d'entrée, la première partie correspondant à la partie basse de la dynamique au deuxième couple de signaux de sortie ($|I_2|$, $|Q_2|$) et la partie haute de la dynamique au premier couple de signaux de sortie ($|I_1|$, $|Q_1|$).

4. Procédé selon la revendication 3, caractérisé en ce qu'il consiste à sélectionner le premier couple de signaux de sortie ($I_1$, $Q_1$) si l'un des deux signaux ($I_1$ et $Q_1$) est supérieur en valeur absolue à la tension d'écrétage (V), le deuxième couple de signaux de sortie ($I_2$, $Q_2$) alors en saturation étant inexploitable, sinon à sélectionner le deuxième couple de signaux de sortie ($I_2$, $Q_2$).

5. Procédé selon la revendication 1, caractérisé en ce qu'il consiste à comparer (13), aux instants d'échantillonnage, la valeur absolue des signaux ($|I_1|$ et $|Q_1|$) portés respectivement par la première voie (I) et la deuxième voie (Q), le résultat de la comparaison (13) donnant une condition déterminée ($C_{IQ}$), et en fonction de l'état de cette condition ($C_{IQ}$) à sélectionner instantanément la voie dont le signal, porté par cette voie, possède la plus grande valeur absolue, et en ce qu'il consiste à soustraire (15 et 16) du signe de l'échantillon du signal porté par la voie courante sélectionnée, le signe de l'échantillon du signal retardé (19 et 20) d'un temps bit (T) appartenant à la même voie et ce, même si une nouvelle sélection de voie vient à s'effectuer entre deux temps bit (T) consécutifs, le résultat de la soustraction (15 et 16) permettant la restitution des symboles binaires.

6. Procédé selon la revendication 5, caractérisé en ce qu'il consiste à filtrer le résultat ($C_{IQ}$) de la comparaison (13) par un filtre du premier degré (14) de gain unitaire pour que la commutation sur les voies (I et Q) ne se fasse pas sur des pointes de bruit et à comparer par un comparateur (C) la valeur ($C_{IQ\text{- out}}$) de la sortie du filtre (14) à une valeur de seuil (SEUIL) déterminée pour sélectionner l'une des deux voies (I et Q).

7. Procédé selon la revendication 5, caractérisé en ce qu'il consiste à filtrer le résultat ($C_{IQ}$) de la comparaison (13) par un système de comptage (14) qui est incrémenté quand le résultat ($C_{IQ}$) de la comparaison (13) est égal à 1 jusqu'à une valeur de saturation positive déterminée (MAX) et décrémenté quand le résultat ($C_{IQ}$) de la comparaison (13) est égal à 0 jusqu'à une valeur de saturation négative déterminée (-MAX), et à comparer par un comparateur (C) la valeur ($C_{IQ\text{- out}}$) de la sortie du système de comptage (14) à une valeur de seuil (SEUIL) déterminée pour sélectionner l'une des deux voies (I et Q).

8. Procédé selon l'une quelconque des revendications 1 à 7, caractérisé en ce que les opérations de comparaison des valeurs absolues d'un premier signal avec un deuxième signal de sortie

$$\left( |x| \gtrless |y| \right)$$

porté respectivement par l'une des voies en phase (I) et en quadrature (Q) est basé sur l'étude des signes des quantités respectives à la somme ($S^+$) et à la différence ($S^-$) du premier signal et du deuxième signal de sortie, et si le signe de la somme ($S^+$) est identique au signe de la différence ($S^-$) alors la valeur absolue du premier signal de sortie est supérieure à la valeur absolue du deuxième signal ($|x| > |y|$), sinon si le signe de la somme ($S^+$) est différent du signe de la différence ($S^-$) alors la valeur absolue du premier signal de sortie est inférieure à la valeur absolue du deuxième signal de sortie ($|x| < |y|$).

9. Dispositif pour la mise en oeuvre du procédé selon l'une quelconque des revendications 1 à 8, caractérisé en ce qu'il comporte un étage de prétraitement (38 et 48) comportant des moyens (47 et 49 à 52) pour comparer entre elles les valeurs absolues des amplitudes des signaux de sortie, le premier moyen de comparaison (47) permettant l'implémentation de la méthode "voie maximale" en exploitant le résultat d'exploitation de la condition ($C_{IQ}$) issue des premiers moyens de comparaison (47) et les deuxièmes moyens de comparaison (49 à 52) permettant l'implémentation de la méthode "Arctg simplifiée" en exploitant le résultat d'exploitation des conditions ($C_I$ et $C_Q$) issues des deuxièmes moyens de comparaison (49 à 52), des moyens (45 et 46) pour comparer les valeurs absolues des amplitudes de chacun des signaux de sortie( $|I_1|$ et $|Q_1|$) du premier couple de signaux de sortie ($I_1$, $Q_1$) à la tension d'écrétage (V) permettant la gestion de la dynamique du signal d'entrée (E), et en ce qu'il comporte des moyens pour calculer la différence d'état des signaux prétraités par les moyens de prétraitement (38 et 48) considérés entre deux temps d'échantillonnage successifs séparés d'un temps bit (T) pour restituer les bits de phase.

10. Dispositif de démodulation numérique à différentiation de phase consistant à démoduler un signal (E) ayant subi une modulation bi-phase différentielle type S encore appelée modulation FMO, et reçu par un récepteur homodyne (21 à 37) permettant la formation d'une première voie (I) et d'une deuxième voie (Q) portant respectivement un signal ($I_1$) en phase et un signal ($Q_1$) en quadrature de phase avec le signal d'entrée (E) du récepteur (21 à 37), caractérisé en ce qu'il comporte, pour s'affranchir du besoin d'un convertisseur analogique-numérique à l'entrée de chaque voie (I et Q), des moyens (47 et 49 à 52) pour comparer les valeurs absolues des amplitudes des deux signaux de sortie des voies (I et Q), le résultat de cette comparaison donnant des conditions déterminées ($C_{IQ}$, $C_1$, $C_2$, $C'_1$ et $C'_2$), et des moyens de calcul utilisant les résultats d'exploitation de ces conditions ($C_{IQ}$, $C_1$, $C_2$, $C'_1$ et $C'_2$) par une logique d'exploitation déterminée, pour calculer la différence d'état du signal de sortie pris entre l'instant d'échantillonnage courant (t) et l'instant d'échantillonnage précédent (t-T), l'intervalle de temps, séparant ces deux instants d'échantillonnage correspondant à un temps bit (T).

**11.** Système de communication hyperfréquence entre des balises et des badges, comportant au moins une balise fixe (55) émettant continuellement un signal, constitué de cycles d'ondes radioélectriques, à destination d'un ou plusieurs badges (53) pénétrant dans le lobe d'antenne (57) de la balise (55), et consistant dès l'interception d'une réponse d'identification par réflexion du signal par au moins un badge (53), à dialoguer avec le badge (53) sélectionné par la balise (55) selon un protocole déterminé (58), caractérisé en ce que le badge (53) comporte un bloc "radio" (59) permettant d'une part la réception du signal émis par la balise (55) et d'autre part la réflexion des d'informations contenues dans le badge (53), un bloc analogique basse fréquence (60) de traitement du signal reçu par le bloc "radio" (59), un bloc de traitement numérique (61) recevant les données traitées par le bloc analogique basse fréquence (60) et permettant la gestion des informations échangées entre le badge (53) et la balise (55) selon le protocole déterminé (58), et un bloc d'alimentation (63) autonome permettant une alimentation sans coupure des différents blocs constituant le badge (53), et en ce que la balise (55) comporte un bloc "radio" (75) comportant une chaîne émission (80) et une chaîne de réception (79), la chaîne de réception (79) comportant un démodulateur (84) de phase comportant, pour s'affranchir du besoin d'un convertisseur analogique-numérique à l'entrée des voies de réception, des moyens pour comparer la valeur absolue des amplitudes des signaux de sortie des deux voies (I et Q), des moyens pour calculer la différence d'état du signal pris entre l'instant d'échantillonnage courant et l'instant d'échantillonnage précédent, l'intervalle de temps séparant ces deux instants d'échantillonnage correspondant à un temps bit (T), et en ce que la balise (53) comporte un oscillateur local (81) pilotant la chaîne d'émission (80) et la chaîne de réception (79) simultanément, un bloc de traitement du signal (76) effectuant une synchronisation trame et bit sur le signal reçu du bloc "radio" (75) et un bloc de gestion (77) permettant de gérer des informations reçues et des informations à émettre, et en ce que le protocole de communication (58) entre la balise (55) et le badge (53), orchestré par la balise (55) est constitué d'un cycle continuel d'ondes radioélectriques, chaque cycle étant constitué d'une phase de réveil des badges (53) et d'une phase d'allocation permettant à la balise (55) de choisir le badge ($53_1$), en le désignant par un message déterminé afin d'effectuer une transaction.

**12.** Système selon la revendication 11, caractérisé en ce que le démodulateur (84) comporte un étage de prétraitement (38 et 48) comportant des moyens (47 et 49 à 52) pour comparer entre elles les valeurs absolues des amplitudes des signaux de sortie, le premier moyen de comparaison (47) permettant l'implémentation de la méthode "voie maximale" en exploitant le résultat d'exploitation de la condition ($C_{IQ}$) issue des premiers moyens de comparaison (47) et les deuxièmes moyens de comparaison (49 à 52) permettant l'implémentation de la méthode "Arctg simplifiée" en exploitant le résultat d'exploitation des conditions ($C_I$ et $C_Q$) issues des deuxièmes moyens de comparaison (49 à 52), des moyens (45 et 46) pour comparer les valeurs absolues des amplitudes de chacun des signaux de sortie ($|I_1|$ et $|Q_1|$) du premier couple de signaux de sortie ($I_1$, $Q_1$) à la tension.d'écrétage V permettant la gestion de la dynamique du signal d'entrée (E), et en ce qu'il comporte des moyens pour calculer la différence d'état des signaux prétraités par les moyens de prétraitement (38 et 48) considérés entre deux temps d'échantillonnage successifs séparés d'un temps bit (T) pour restituer les symboles binaires.

**13.** Application du système de communication hyperfréquence selon l'une quelconque des revendications 11 et 12, au péage automatique sur voies de circulation payante, caractérisée en ce que le bloc d'interface (62) du badge (53) est prévu pour recevoir une carte à puce contenant une somme d'argent préprogrammée ou un numéro d'identification du compte bancaire de l'utilisateur de la carte, et lorsque le numéro de carte est identifié par la balise (55), en ce que la somme préprogrammée sur la carte à puce de l'utilisateur est débitée de la somme correspondant au montant du péage.

FIG.1

| HYPOTHESES | | | CONSEQUENCE | |
|---|---|---|---|---|
| $X > 0$ | $y > 0$ | $|X| > |y|$ | $S+ = 1$ | $S- = 1$ |
| $X > 0$ | $y > 0$ | $|X| < |y|$ | $S+ = 1$ | $S- = -1$ |
| $X > 0$ | $y < 0$ | $|X| > |y|$ | $S+ = 1$ | $S- = 1$ |
| $X > 0$ | $y < 0$ | $|X| < |y|$ | $S+ = -1$ | $S- = 1$ |
| | | | | |
| $X < 0$ | $y < 0$ | $|X| > |y|$ | $S+ = -1$ | $S- = -1$ |
| $X < 0$ | $y < 0$ | $|X| < |y|$ | $S+ = -1$ | $S- = +1$ |
| $X < 0$ | $y > 0$ | $|X| > |y|$ | $S+ = -1$ | $S- = -1$ |
| $X < 0$ | $y > 0$ | $|X| < |y|$ | $S+ = 1$ | $S- = -1$ |

FIG.3

14

FIG.2

FIG.4

Sélection
des voies

15

FIG.5

FIG.6

EP 0 661 853 A1

FIG.7

EP 0 661 853 A1

EP 0 661 853 A1

identité
balise

A

REVEIL

1000 µs

Allocation

C

E

B

identité    identité    identité    identité    identité
badge      badge      badge      badge      badge

D

réponse
badge
53₁

F

réponse
badge
53₁

| B₁ | B₂ | B₃ | B₄ | B₅ |

100µs   50µs   50µs   50µs   50µs   100µs   200µs   100µs   100µs   100µs

CYCLE

# FIG.8

FIG.9

FIG. 10

Office européen
des brevets

**RAPPORT DE RECHERCHE EUROPEENNE**

Numero de la demande

EP 94 40 3052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 429 948 (HITACHI)<br>* abrégé *<br>* colonne 4, ligne 52 - colonne 5, ligne 19 *<br>* colonne 6, ligne 6 - ligne 33 *<br>--- | 1,10 | H04L27/22<br>G01S13/76<br>G07B15/00 |
| A | ELECTRONICS AND COMMUNICATION ENGINEERING JOURNAL,<br>vol. 3, LONDON GB,<br>page 99<br>MANH ANH DO & JIN TEONG ONG 'New automatic vehicle identification system for detection of traffic without lane discipline'<br>* abrégé; figures 7,9 *<br>--- | 11-13 | |
| A | 35th IEEE Vehicular Technology Conference, 21-23 Mai 1985, Boulder, US; IEEE, New York, US, 1989; pages 285-191, Reitz: "Automatic vehicle identification technology and applications"<br>* abrégé; figures 4,5 *<br>----- | 13-15 | |

**DOMAINES TECHNIQUES RECHERCHES (Int.Cl.6)**

H04L
G01S
G07B

Le présent rapport a été établi pour toutes les revendications

| Lieu de la recherche | Date d'achèvement de la recherche | Examinateur |
|---|---|---|
| LA HAYE | 13 Avril 1995 | Scriven, P |